Europäisches Patentamt

European Patent Office

Office européen des brevets

(11) Publication number: **0 109 222**
**B1**

(12) EUROPEAN PATENT SPECIFICATION

(45) Date of publication of patent specification: 08.07.87

(21) Application number: 83306616.0

(22) Date of filing: 31.10.83

(51) Int. Cl.⁴: **B 29 C 39/18,** B 29 C 39/22, B 29 C 41/26, B 29 C 41/30, H 01 B 7/08

(54) Apparatus and method for extruding flat multiconductor cable.

(30) Priority: **01.11.82 US 437999**
**01.07.83 US 510475**

(43) Date of publication of application:
**23.05.84 Bulletin 84/21**

(45) Publication of the grant of the patent:
**08.07.87 Bulletin 87/28**

(84) Designated Contracting States:
**AT BE DE FR GB IT NL SE**

(56) References cited:
**AU-B- 513 634**
**DE-C- 882 494**
**FR-A-2 149 365**
**US-A-2 944 285**
**US-A-3 239 396**
**US-A-3 445 915**
**US-A-3 833 755**
**US-A-3 999 914**

(73) Proprietor: **AMP INCORPORATED**
**P.O. Box 3608 449 Eisenhower Boulevard**
**Harrisburg Pennsylvania 17105 (US)**

(72) Inventor: **Wise, Joseph Agusta**
**2 North Hanover Street Union Deposit**
**Hershey Pennsylvania 17033 (US)**
Inventor: **Green, Michael Patrick**
**204 Fairway Drive**
**Mechanicsburg Pennsylvania 17055 (US)**

(74) Representative: **Gray, Robin Oliver et al**
**BARON & WARREN 18 South End Kensington**
**London W8 5BU (GB)**

Courier Press, Leamington Spa, England.

## Description

The present invention relates to an apparatus and a method for extruding flat multiconductor cable.

There is disclosed in US—A—3,239,396 an apparatus for manufacture of flat cable of the type comprising continuous parallel filamentous elements embedded in plastic insulation. The apparatus comprises a wheel mounted for rotation about its axis, the wheel having a first circumferential surface on a first radius from the axis. The circumferential surface has a plurality of continuous parallel grooves therein about the circumference of the wheel. The apparatus further comprises supply means for supplying a plurality of filamentous elements toward the circumferential surface of the wheel such that the elements are aligned in the grooves and are circumferentially tangent to the wheel over a common arc.

The apparatus described above requires a second wheel or roller which cooperates with the first as calender rollers to press a continuous strip of plastic against the elements. The strip is a composite laminate such as Mylar and polyethylene which is heated by the rollers to flow the polyethylene around the conductors. The semifinished cable is then drawn to a second set of calender rollers where a second heated strip is applied to form a finished cable. The apparatus has the disadvantage that expensive laminated strip is required, and rollers must be heated. The strip and the elements are kept under tension as they are drawn between all rollers, precluding use of optical fiber or fine gage wire. Cooling does not appear to be very efficient, and the elements may thus wander in the soft polyethylene as the cable leaves each set of rollers. Bonding the second strip to the first requires considerable softening of both strips, adding to the wandering problem. Where the elements are electrical conductors, wandering can lead to undesirable noise or short circuiting. Restringing the apparatus would require separating each pair of rollers.

It is known from US—A—3 445 915 to provide apparatus for producing folded thermoplastic strips for sliding clasp fasteners which comprises a rotatable wheel having a circumferential surface on a first radius, having a plurality of raised surfaces on a second radius thereon, the second radius being greater than the first radius, supply means for supplying a plurality of filamentous elements towards the circumferential surface of the wheel such that the elements overly the circumference over a common arc in spaced relation axially of the wheel, means for precisely aligning said elements around the circumference, extrusion means adjacent the common arc for forming plastic between the extrusion means and the circumferential surface and around the filamentous elements. A shaving blade is provided to cut off excess plastic material from the rotatable wheel at the second radius.

It is an object to provide an improved apparatus and a method for producing flat multiconductor cable.

According to the invention apparatus for the manufacture of flat cable, comprising a rotatable wheel having a circumferential surface on a first radius; supply means for supplying a plurality of filamentous elements towards the circumferential surface of the wheel such that the elements overly the circumference over a common arc; extrusion means adjacent said common arc for forming plastic between the circumference of the wheel and the extrusion means, and around the filamentous elements, the circumferential surface further comprising a plurality of raised surfaces thereon, the raised surfaces defined on a second radius, the second radius being greater than the first said radius, the circumferential surface further comprising means for precisely aligning said filamentous elements around the circumference, is characterised in that the circumferential surface is flanked by a pair of circumferential rails, each rail having a distal surface on a third radius, the third radius being greater than the second radius, the circumferential rails in combination with the circumferential surface defining a molding cavity; the extrusion means being positioned so as to extrude material onto the circumferential surface such that the extruded material substantially fills said molding cavity, and forms a continuous strip of extruded material with said filamentous elements partially embedded therein.

The invention also includes a method of manufacturing flat cable in which a plurality of electrically conductive filamentous elements is supplied towards a circumferential surface on a first radius of a rotating wheel having a plurality of juxtaposed, circumferentially extending grooves in said surface, such that each element is seated in a respective groove over a common arc, the arrangement being such that each element is substantially stationary with respect to the circumferential surface, over said arc, in which method plastic material is extruded against the circumferential surface, said surface having a plurality of raised surfaces defined on a second radius greater than that of said first surface, characterised in that the filamentous elements are electrically conductive elements, the plastic material is an insulating material and a wheel is used with a pair of circumferential rails flanking said circumferential surface, each rail having a distal surface on a third radius, the third radius being greater than said second radius, the combination of said circumferential rails and said circumferential surface defining a molding cavity, the extruding of said plastic substantially fills the molding cavity and forms a continuous strip of extruded material which said filamentous elements partially embedded therein.

An advantage of the invention is that the semifinished cable can be cooled by a water bath before it leaves the wheel, so that the spacing of the elements is maintained during extrusion and cooling. Replacement of a broken element is readily accomplished by taping a wire in one of the parallel grooves on the wheel. Fine wires or optical fiber may be processed on the wheel since high tension is not required.

Ribbon cable is more commonly manufactured by drawing the elements through a die, where an uncured polymeric composition is forced around the elements in a closed cavity in the die. Curing is subsequently accomplished by cooling, preferably hastened by passing through a water bath. This method also presents inherent difficulty in maintaining the spacing of the elements during the extrusion and cooling stages, where movement of the plastic and shrinkage can cause the elements to wander. This method also presents difficulty in aligning the elements in the die both initially and in the event of breakage. Applicants' invention solves these problems by combining extrusion in cooperation with a grooved wheel.

Several embodiments of the invention will now be described by way of example with reference to the accompanying drawings, in which:

Figure 1 is a diagrammatic view of the extrusion wheel in a cable production line;

Figure 2A is a perspective of part of the wheel;

Figure 2B is a perspective of part of the wheel with wires thereon;

Figure 2C is a perspective of part of the wheel with plastic extruded onto the wires to form the semifinished cable;

Figure 3 is a cutaway perspective of the guide wheel, extrusion wheel, extrusion head, and semifinished cable;

Figure 4 is a perspective of the final laminating procedure;

Figure 5 is a diagrammatic perspective of the prior art apparatus;

Figures 6 through 10 are sequential perspectives showing manufacture of a coaxial ribbon cable having close centerline spacing;

Figure 11 is an alternative embodiment of coaxial ribbon cable manufactured on a wheel

Figure 12 is an enlarged cross section of the coaxial ribbon cable laminate;

Figure 13A is a perspective of a segment of wheel for making low cross-talk telephone cable;

Figure 13B is a cross section of a laminate of cables produced on the wheel of Figure 13A;

Figure 14A is a perspective of a segment of wheel for making hybrid cable having capturing means for optical fiber;

Figure 14B is a perspective of a segment of cable made on the wheel of Figure 14A;

Figure 15A is a perspective of a segment of wheel for making cable with continuously captured elements; and

Figure 15B is a perspective of a segment of cable made on the wheel of Figure 15A.

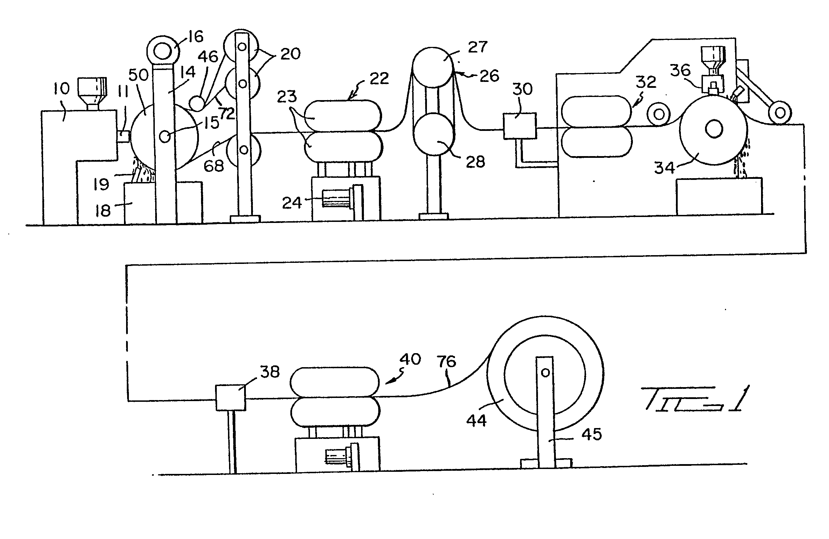

Figure 1 is a diagrammatic view of the overall manufacturing scheme using the extrusion wheel 50 of the present invention. An extruder 10 provides heat and pressure to deliver molten plastic, such as PVC, to extrusion die 11 where it is extruded against wheel 50. Individual filamentous elements such as copper wires 72 are fed from reels 20 and converge into a single planar array tangent to grooved guide wheel 46, which is mounted for rotation. The wires 72 pass from wheel 46 tangentially toward wheel 50 and pass around an arc on the circumference thereof past extrusion die 11 where semifinished cable 68 is formed. The wheel 50 is mounted to frame 14 by axle 15 and is driven by motor 16 by a chain (not shown), though a gear drive may also be arranged. Cooling tank 18 below the wheel 50 catches water sprayed from nozzle 19 against the wheel to cool the wheel and facilitate curing of the semifinished cable 68.

Referring still to Figure 1, the semifinished cable 68 is drawn by puller 22 which is synchronized with wheel 50 for uniform cable speed. The puller 22 comprises a pair of endless belts 23 driven by a motor 24. An accumulator 26 comprises an upper spool 27 with a helical cable track thereon and a lower spool 28 with a like track, spool 28 being arranged for height adjustment to take up cable slack downstream thereof, toward trimmer 30. Trimmer 30 removes plastic flash from cable 68 which is present from the molding process. Puller 32 draws semifinished cable 68 from trimmer 30 and feeds it toward a second extrusion wheel 34, where additional plastic is extruded onto the semifinished cable 68 by extruder 36 to make the finished cable 76. The surface of wheel 34 is profiled with a circumferential channel which acts as a guide for the cable. Cable 76 is drawn through trimmer 38 by puller 40 and fed toward reel 44, which is removable from frame 45 for use as a package.

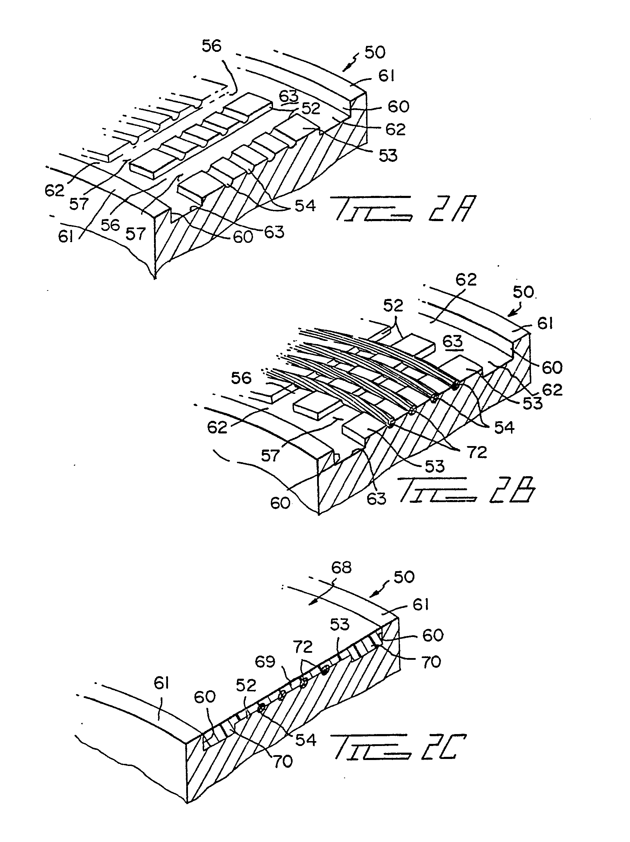

Figure 2A is a perspective of part of an extrusion wheel 50 having lateral ribs 52, which are parallel to each other and the axis of rotation of the wheel 50. Each rib 52 has a distal surface 53 on a first radius from the axis and a series of grooves 54 thereon which are semicircular in cross section. The distal surfaces 53 taken as a whole define a first circumferential surface 53 of the wheel. Each groove 54 is axially aligned with a single groove 54 in the distal surface 53 of each adjacent rib 52; taken around the circumference of the ribbed wheel 50, each set of axially aligned grooves defines a circle, the number of circles corresponding to the number of grooves in a single rib. The circles in turn define parallel planes within the wheel 50. The ribs 52 have lateral channels 56 therebetween, each channel 56 having floor 57 on a second radius from the axis. Stated differently, each set of axially aligned grooves 54 could be described as a single groove interrupted by the lateral channels. The wheel has a pair of circumferential rails 60 having distal surfaces 61 on a third radius from the axis, the third radius being greater than the first. The rails 60 flank the ribs 52 and define a circumferential channel 62 between each rail 60 and the end of the ribs 52 adjacent that rail. The ribs 52 are thus bounded at both ends by the channels 62, which have floors 63 on the second radius. Floors 63 are thus continuous with floors 57 of lateral channels 56 and form a continuous cylindrical surface profiled as a ladder.

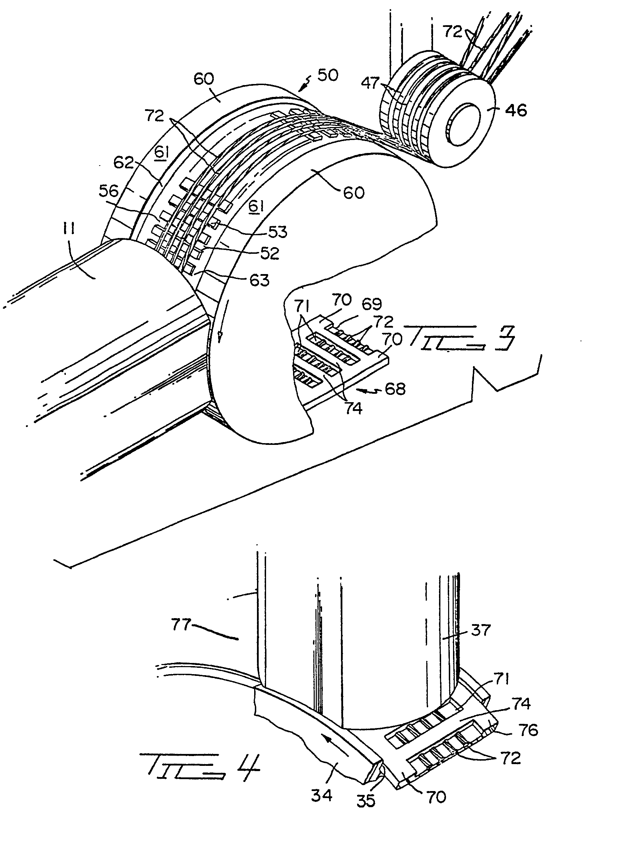

Figure 2B depicts the ribbed wheel 50 with wires 72 lying in grooves 54, as between guide wheel 46 and the extrusion die 11 (see also Figure 3). Figure 2C depicts the wheel with semifinished cable 68 thereon, as between extrusion die 11 and the take-off point where the cable 68 is drawn tangentially from the wheel 50 by puller 22. The extruded plastic forms a continuous first ribbon 69 in which wires 72 are only partially embedded where they lie against ribs 52. The cable 68 is bounded by side ribs 70 which are formed between the lateral ribs 52 and the circumferential rails 60.

Figure 3 is a perspective of the extrusion die 11 in proximity with extrusion wheel 50. Note that the die 11 bridges the width of the wheel and is situated in a close clearance with distal surfaces 61 of circumferential rails 60. Plastic is thus extruded into lateral channels 56 and circumferential channels 62 with only a thin ribbon of flash between the die 11 and each distal surface 61. The semifinished cable 68 is drawn from the wheel 50 after it is drawn over a portion thereof; salient features of the structure include lateral bridges 74, formed in lateral channels 56 of the extrusion wheel 50, which completely encase wires 72. The lateral channels 71 in the cable 68 were formed by lateral ribs 52 on the extrusion wheel 50 and leave wires 72 exposed where they lay on distal surfaces 53. The wires 72 are partially embedded in ribbon 69 between bridges 74. Plastic flash which forms between the extrusion die 11 and distal surfaces 61 has been eliminated for clarity. Such flash is trimmed at the subsequent trimmer 30 (Figure 1).

Figure 3 also depicts guide wheel 46 as situated proximate to ribbed extrusion wheel 50. The guide wheel 46 is mounted for free rotation, as an idler wheel, and has a series of parallel circumferential grooves 47 therein which are coplanar with circles defined by grooves 54 in the extrusion wheel 50. Thus the wires 72 from reels 20 (Figure 1) will pass from the guide wheel 46 toward the extrusion wheel 50 in a coplanar array spaced for axial reception in grooves 54.

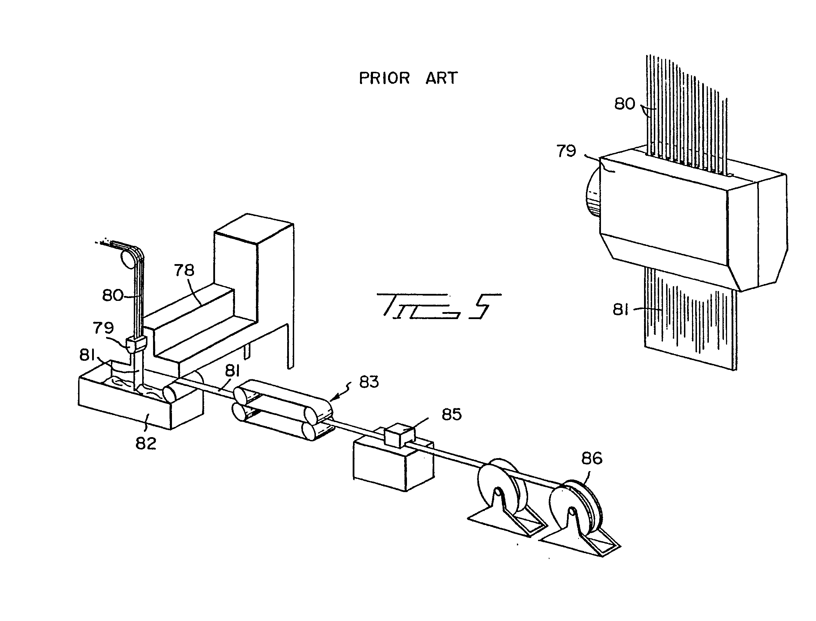

Figure 4 is a perspective of the laminating wheel 34 where the finished cable 76 is produced by extruding a second ribbon of cable 77 through extrusion die 37 against semifinished cable 68, which lies in a circumferential guide channel 35 on the wheel 34. The semifinished cable 68 is positioned in channel 35 on laminating wheel 34, which is driven by an electric motor and carries the cable beneath extrusion die 79 where a second ribbon 77 of plastic insulation is extruded onto semifinished cable 68 to form finished cable 78. Where the semifinished cable 68 and finished cable 76 are rigid PVC, it may be necessary to heat the surface of cable 68 in order to assure a good bond. This is readily accomplished by use of an infrared heater adjacent to cable 68 before passing die 37. PVC with sufficient plasticizer may be bonded without preheating. Plastics with sharper melting points, such as nylon, may require adhesive bonding of a second ribbon of cable to semifinished cable 68 in order to form a finished ribbon cable. The finished cable 73 is structurally similar to prior art cable insofar as it comprises a planar array of wires embedded in plastic and is commonly known as ribbon cable.

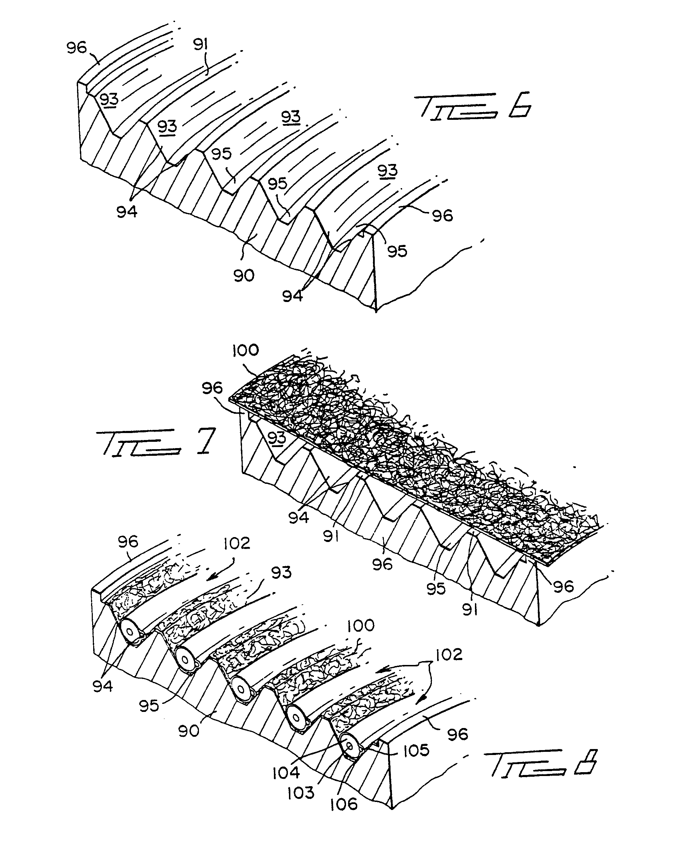

Advantages of the apparatus may be best appreciated with reference to a common prior art process as depicted in Figure 5. Wires 80 are drawn through an extrusion die 79 where plastic is extruded onto the wires by extruder 78. The die 79, shown enlarged in Figure 5A, consists of two halves sandwiched together to form individual wire receiving apertures through which wires 80 are drawn into a cavity inside the die which receives the extruded plastic. Completed cable 81 exits from a slot at the bottom of the die where it is drawn to the cooling tank. Die 79 is necessarily fabricated from a hard metal such as stainless steel to resist abrasion by continuous movement of metal conductors 80. Insofar as wire position is not strictly controlled in the cavity inside the die, it is subject to some deflection by the force of entering plastic. Additional wire movement after extrusion is still possible since the plastic is not cured as it exits, and thus is subject to thermal deformation. If one of the wires 80 happens to break, considerable down time is expended dismantling the die, placing new wires therein and through to puller 83, and resuming extrusion.

The ribbed extrusion wheel 50 of the instant invention does not suffer wire movement relative to the surface thereof, and thus is not subject to abrasion by the wire. Thus, the wheel 50 may be machined from a soft metal such as aluminum which reduces fabrication costs. As the wires are held in place by the grooves on the ribs while a length of semifinished cable 68 remains on the wheel 50 and is subjected to cooling, curing is accomplished while wire position is controlled, making possible a ribbon cable with closely controlled spacing of wires therein. Wire breakage is readily remedied by displacing the wheel from the extrusion die and replacing the broken wire in the respective axially aligned grooves in the ribs. Alternatively, the replacement wire can be taped to the top of the wheel; after the tape passes the nozzle the cable will be whole again.

The present invention may be utilized with filamentous elements other than copper wire, such as optical fiber, either solely or mixed with electrically conductive elements. Further, insulated wire may be embedded in the plastic where it is desired to use a conductive vehicle such as nylon impregnated with metal powder, which would effectively produce a low cross-talk cable without individual ground wires. In such an embodiment the impregnated plastic itself would attenuate noise between signal conductors. Relative low cost of wheel fabrication permits economical manufacture of relatively short runs of cable where groove radius is varied to accommodate elements of varying gage.

The structure of the semifinished cable may lend it to use as a finished cable in applications where a fully insulated ribbon is not necessary.

The advantages would include ready visibility of the filamentous elements and easy exposure for termination. Since the portion of bridge 74 (Figures 3 and 4) covering the wires 72 is thin, the wires may be separated simply by pulling them laterally through the bridges 74. This would be a useful expedient in manufacturing a wiring harness; recall that individually insulated wires may be embedded in the cable 68. In the fully insulated version, finished cable 76 may have two different colors which would be helpful in orienting the cable.

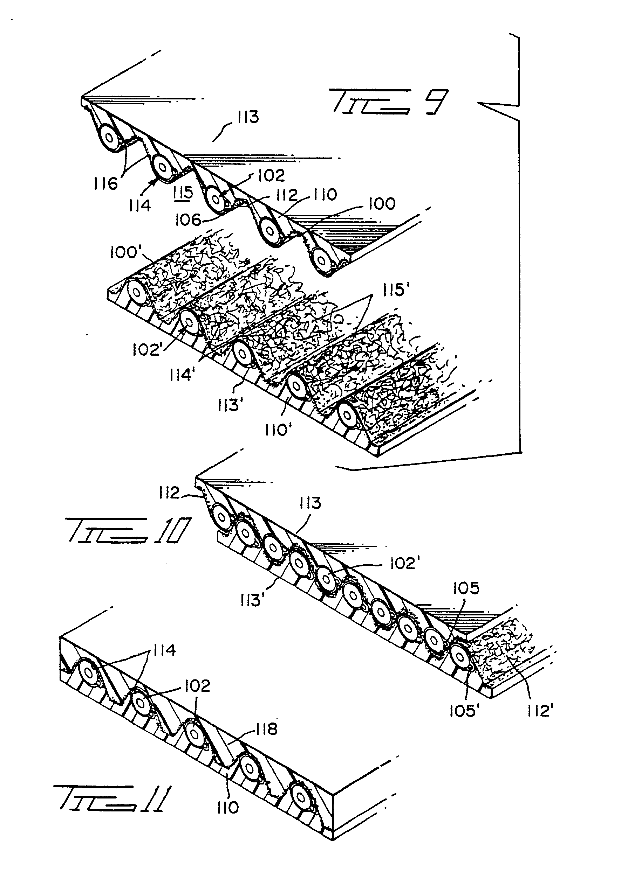

Other embodiments within the ambit of the present invention are achieved through different wheel profiles. Figure 6 depicts a wheel 90 having a circumferential surface 91 which is interrupted by parallel grooves 93 and flanked by circumferential rails 96. Each groove 93 is profiled by a pair of opposed walls 94 which converge from the circumferential surface 91 toward a floor 95. The walls 94 are symmetric about the center plane of the groove, which is parallel to respective center planes of other grooves 93 on the wheel. The cross section of each groove 93 is the same as the cross section of the portions of the wheel 90 between grooves, which may be described as a symmetric trapezoid. The wheel 90 is installed in the system of Figure 1 in place of wheel 50, which system is otherwise generally the same.

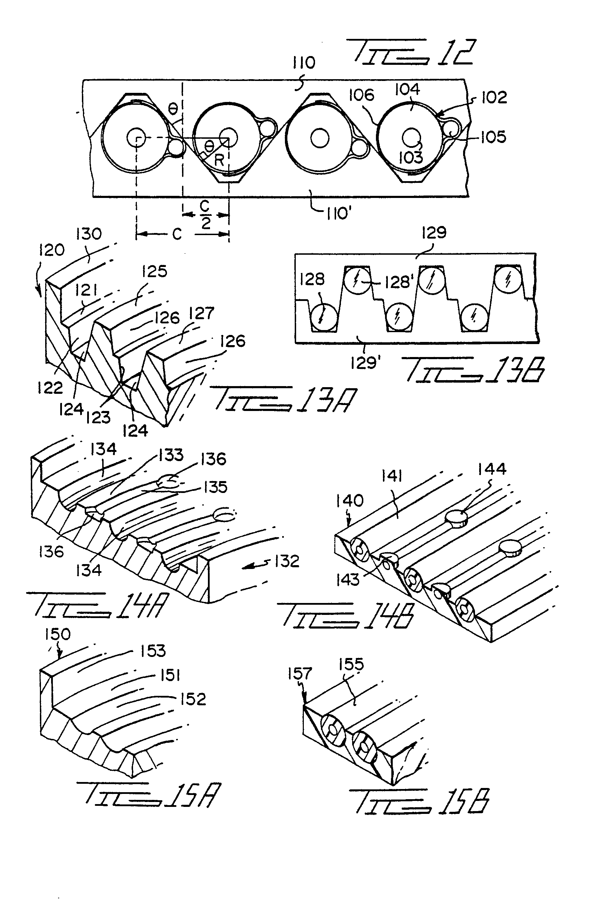

The absence of lateral channels in wheel 90 necessitates other capturing means for filamentous elements received in grooves 93, and Figure 7 illustrates a ribbon of fiber mat 100 used to that end. The mat 100 is fed tangently to the circumferential surface 91 of wheel 90 from a reel such as reels 20 of Figure 1; the mate is likewise fed at the same speed as the elements 72 and the circumferential surface 91 of the wheel 90. The mat 100 is pervious to molten extruded plastic; Reemay mat (a trademark of DuPont) has been found to be suitable. Following tangential alignment of mat 100 with wheel 90, filamentous elements such as coaxial cables 102 are aligned tangentially on the wheel 90 over mat 100 as shown in Figure 8. Each cable 102 comprises a signal wire 103 surrounded by insulation 104 which is wrapped in a foil sheath 106 and includes a drain wire 105, as in conventional with coaxial cable. The diameter of the cable is about 0.030 inch and the centerline spacing is about 0.100 inch. A "cigarette wrap" type configuration for sheath 106 is preferred so that the coaxial cables 102 can be formed in dies between supply reels 20 and the extrusion wheel 90; this facilitates uniform alignment of the cables 102 in the grooves 93 with respective drain wires 105 against one of each pair of opposed walls 94. The cables 102 urge the mat 100 into grooves 93 from the position of Figure 7 to the position of Figure 8.

Figure 9 illustrates two identical ribbons of plastic 110, 110' formed by aligning mat 100 and cables 102 on wheel 90 as shown in Figure 8, and extruding molten plastic thereagainst from an extrusion head as shown in Figure 11. Circumferential rails 96 (Figures 6, 7, and 8) substantially limit lateral flow of extruded plastic; any excess is trimmed as with the ribbed cable heretofore described. Mat 100 is impregnated with plastic insulation to capture the cables 102 against the first surface 112 of semifinished cable 110. The first surface 112 and coaxial cables 102 embedded therein thus form alternating ridges 114 and valleys 115 individually flanked by opposed walls 116. Semifinished flat ribbon cable 110 is shown aligned with a second identical cable 110' thereabove for laminating together; the wheel profile heretofore described assures that the ridges 114 in cable 110 will be received in the valleys 115' of cable 110', and the ridges 114' in cable 110' will be received in the valleys 115 of cable 110.

Figure 10 illustrates the modular aspect of a multiconductor ribbon cable so formed; a bottom layer of semifinished cables 110 can be offset from a top layer of cables 110' to build a finished cable of any desired width with the coaxial cables 102 on 0.100 inch centers. Note that any filamentous elements may be used in place of the mini-coaxial cables 102 described; this example is described primarily to illustrate the usefulness of the wheel profile described.

Figure 11 shows an alternative use of semifinished cable 110 wherein it is laminated against a second ribbon 118 of insulation only which was extruded in the same wheel without wires or cables in the grooves. Alternatively, second ribbon 118 may be extruded directly against ribbon 110 at an extruder 36 as shown in Figure 1. Note that in lieu of a second ribbon 118 of insulation only a ribbon containing conventional copper conductor or other filamentous elements such as optical fiber could be laminated against cable 110.

To achieve a coplanar array of elements when the cables 110, 110' are mated, the grooves of wheel 90 must be designed for the particular size of cable 102 to be used in the cable. Figure 12 is a cross section of the cable detailing the geometry necessary to achieve a coplanar array of conductors. "R" represents the radius of the cable 102, taken from the center of signal wire 103 to the surface of sheath 106 where it lies against the surface of the cable 110, i.e., "R" is not taken through drain wire 105. "R" thus represents the distance from the center of the cable 102 to the point of tangency with wall 116 of the adjacent cable. "C" represents the center-to-center spacing of cables 102, 102', and "C/2" thus represents the horizontal distance from the center of cables 102, 102' to walls 116, 116' when the cable is flat and the cables 102, 102' are all coplanar. The angle $\theta$ is thus defined by the relationship $\cos \theta = R \div C/2 = 2R/C$. The angle which the walls of the grooves 93 (Figure 6) must form with a plane perpendicular to the axis of wheel 90 is therefore defined by the relationship $\theta = \arccos (2R/C)$ for filamentous elements of radius R on centers C. This coplanar relationship is desirable for purposes of stripping and terminating the cable. Note that the fiber mat 100 is not shown in Figure 12 and has been disregarded for simplicity, but a mat of thickness "T" yields the equation cos θ = (R + T)/(C/2 + T/cos θ). Where the centerline spacing becomes large relative to the size of the elements in the trapezoidal grooves, θ increases so that the grooves have an increasingly shallow profile. This could cause the filamentous elements to "wander" in the grooves, which would cause loss of control of centerline spacing. This would generally dictate using the arrangement of Figure 11.

Figure 13A illustrates a wheel 120 useful for making low cross-talk telephone cable of the type described in U.S. Patent No. 4,149,026, where conductors in each of two planar arrays are precisely spaced relative to the conductors in the other array. A circumferential surface 121 is interrupted by a series of parallel grooves 122 each having a pair of opposed sidewalls 123 and a floor 124, the grooves 122 being of symmetric trapezoidal cross section. The surface 121 is further interrupted by a series of parallel ridges 125, each ridge having a pair of sidewalls 126 and a distal surface 127, the ridges 125 being of the same trapezoidal cross section as grooves 122. Note that one of the sidewalls 126 is coplanar with one of the sidewalls 123 of an adjacent groove 122, whereas the other sidewall 126 of each ridge 125 is spaced from the other adjacent groove 122 by a portion of circumferential surface 121. The circumferential surface 121 is bounded by lateral rails 130 which are higher than the ridges 125 serve to contain the extruded plastic against lateral flow. Round copper conductors are laid in the grooves 122 prior to extrusion; a fiber mat may also be used as shown in Figure 8. Such a mat could be chosen for its dielectric properties to reduce cross-talk in addition to serving a retention function by plastic impregnation. Figure 13B is a cross section of two identical semifinished cables 129, 129' produced on wheel 120 using round copper conductors 128 and laminated together to form a finished low cross-talk cable. Angles and spacing of sidewalls 123, as well as distance between grooves 122, are designed for a given size conductor 128 in order to achieve the desired spacing between conductors.

Figure 14A depicts a wheel 132 designed for manufacturing a ribbon cable with both conventional wire and optical fiber. Circumferential surface 133 is interrupted by grooves 134 which are profiled as a segment of circular arc and grooves 135 which are likewise profiled as a segment of circular arc, albeit of smaller radius than grooves 134. All grooves 134 and 135 are parallel and follow planes perpendicular to the axis of the wheel. The circumferential surface 133 is further profiled by recesses 136 along the length of each groove 135, each recess 136 being wider and deeper than the groove 135. Figure 14B is a perspective of a hybrid cable 140 manufactured on wheel 132. Insulated power wires 141 are heat bonded to the plastic cable insulation while the optical fibers 143 are retained by studs 144 formed in recesses 136. This is desirable as it has been found that the higher pressures associated with more complete encapsulation reduce the light transmission in unjacketed fibers.

Figure 15A is a perspective of a portion of a wheel 150 having a circumferential surface 151 interrupted by grooves 152 and flanked by rails 153. Each groove 152 is profiled as a segment of circular arc substantially less than 180 degrees, in this case about 120 degrees, whereby a filamentous element of like radius laid therein will be flush therewith over the 120 degrees. This results in a cable 157 as shown in Figure 14B, where individual insulated wires 155 are mechanically trapped in the cable insulation, by virtue of 240 degrees of the circumference of each wire being embedded. This method combined with melt-bonding results in especially good retention of elements, while retaining a perfect centerline registration and producing a cable thin enough to allow easy insulation displacement.

Note that for all embodiments described above the grooves are described as parallel. While parallel orientation is generally desirable, for some applications it would be desirable to have the elements waver from a rectilinear configuration formed by a wheel having grooves in parallel planes. For example, if glass optical fiber is to be used, stretching the cable could cause the fibers to fracture. Employing a wheel with wavering grooves would yield a cable with fibers wavering along a slightly circuitous route through the plastic, thus permitting the fibers to straighten out somewhat if the cable is stretched.

**Claims**

1. An apparatus for the manufacture of flat cable, comprising a rotatable wheel (50, 90, 132, 150) having a circumferential surface on a first radius; supply means for supplying a plurality of filamentous elements (72, 102, 128, 141, 143, 155) towards the circumferential surface of the wheel such that the elements overly the circumference over a common arc; extrusion means (10, 11) adjacent said common arc for forming plastic (69, 110, 129, 140, 157) between the circumference of the wheel (50, 90, 120, 132, 150) and the extrusion means, and around the filamentous elements, the circumferential surface further comprising a plurality of raised surfaces (53, 91, 125, 133) thereon, the raised surfaces defined on a second radius, the second radius being greater than the first said radius, the circumferential surface further comprising means (54, 95, 124, 134, 152) for precisely aligning said filamentous elements around the circumference, characterised in that the circumferential surface is flanked by a pair of circumferential rails (61, 96, 130, 153), each rail having a distal surface on a third radius, the third radius being greater than the second said radius, the circumferential rails in combination with the circumferential surface defining a molding cavity; the extrusion means being positioned so as to extrude material onto the circumferential surface such that the extruded material substantially fills said molding cavity, and forms a continuous strip of extruded material with said filamentous elements partially embedded therein.

2. The apparatus of claim 1, characterised in that the raised surfaces (53) comprise transversely extending and radially disposed surfaces having a length less than the distance between the circumferential rails.

3. The apparatus of claim 2, characterised in that the aligning means comprises circumferentially extending grooves (54) in said raised surfaces.

4. The apparatus of claim 1, characterised in that the aligning means comprises circumferentially extending grooves (93, 122, 152) in said circumferential surface.

5. The apparatus of claim 4, characterised in that the grooves (93, 122) comprises a pair of opposed walls (94, 123) and a floor (95, 124), each pair of walls (94, 123) converging from the circumferential surface (91, 121) towards its floor, and said floor being of less width than the diameter of a filamentous element (102, 128) received in the groove.

6. Apparatus according to claim 3, characterised in that all of the grooves (93) are of like cross section, each groove being symmetric about the center plane thereof, said grooves being of like profile as the portions of the wheel between the grooves, and said grooves being profiled to receive respective elements (102) with the axes of the elements within the radius of the circumferential surface (91) of the wheel, whereby a cable (110) is formed which is hermaphroditically mateable with like cable (110').

7. An apparatus according to claim 5 or 6, characterised in that the grooves (93) are of symmetric trapezoidal cross section.

8. An apparatus according to claim 1, characterised in that the circumferential surface (133) has a plurality of recesses (136) along the entire length of at least one of the grooves (135), each recess (136) being wider and deeper than the groove, whereby the ribbon of plastic (140) is molded with a plurality of individual plastic bridges (144) formed over the element (143) laid in said at least one groove.

9. An apparatus according to claim 1, 3 or 8, characterised in that at least one of the grooves (54, 134, 135, 152) is profiled as a segment of a circular arc, said arc being of substantially like radius to the filamentous element (72, 141, 143, 155) received therein, said segment being less than 180 degrees, whereby over 180 degrees of the circumference of said element is embedded in the plastic ribbon (69, 140, 157).

10. An apparatus according to any preceding claim characterised by a pair of parallel circumferential rails (60) flanking the circumferential surface on the wheel (53), each rail having a distal surface (61) disposed radially outwardly of said circumferential surface, and said extrusion means (10, 11) substantially abutting said distal surfaces (61) of the rails, whereby said rails contain the plastic extruded from said extrusion means.

11. An apparatus according to any preceding claim, characterised by means for cooling (19) the plastic ribbon (69, 110, 129, 140, 157) on said common arc, whereby the plastic is cured whilst the spacing of the filamentous elements (72, 102, 128, 141, 143, 155) is maintained by the grooves (54, 93, 122, 134, 135, 152).

12. A method for manufacturing flat cable in which a plurality of filamentous elements (72, 102, 141, 147, 143, 155) is supplied towards a circumferential surface (53, 91, 121, 133, 151) on a first radius of a rotating wheel having a plurality of juxtaposed, circumferentially extending grooves (54, 93, 122, 134, 135, 152) in said surface, such that each element is seated in a respective groove over a common arc, the arrangement being such that each element is substantially stationary with respect to the circumferential surface, over said arc, in which method plastic material is extended against the circumferential surface (53, 91, 121, 133, 151), said surface having a plurality of raised surfaces defined on a second radius greater than that of said first surface, characterised in that the filamentous elements are electrically conductive elements, the plastic material is an insulating material and a wheel is used with a pair of circumferential rails flanking said circumferential surface, each rail having a distal surface on a third radius, the third radius being greater than said second radius, the combination of said circumferential rails and said circumferential surface defining a molding cavity, the extruding of said plastic substantially fills the molding cavity and forms a continuous strip of extruded material with said filamentous elements partially embedded therein.

13. A method according to claim 12 characterised by the step of supplying a ribbon of fiber mat (100) towards the circumferential surface (53, 91) such that the continuous strip conforms thereto between the filamentous elements (72, 102, 141, 143, 155) and the grooves (54, 93, 122, 134, 135, 152), whereby said continuous strip penetrates the mat and bonds to it to entrap the elements between the mat and the continuous strip of extruded material.

14. A method according to claim 12 or 13, characterised in that at least one of the elements (72, 102, 141, 143, 155) is insulated with a material compatible with the continuous strip, said strip being extruded at a temperature just sufficient partially to melt the insulation on said at least one element, whereby the insulation on said element is melt-bonded to the continuous strip.

15. A method according to claim 12, 13 or 14 characterised by the step of providing the circumferential surface (53, 91, 121, 133, 151) with a plurality of shallow recesses (136) along the entire length of at least one of the grooves (54, 93, 122, 134, 135, 152), each recess being wider and deeper than the groove, whereby the continuous strip is extruded into the recesses to form a plurality of plastic bridges (144) over the element laid in said at least one groove.

16. A method according to claim 12, 13 or 14 wherein each groove (93) comprises a pair of opposed walls (94) and a floor (95), each pair of walls (94) coverging towards its floor (95), said grooves all being of like symmetric cross section and being of like profile as the portions of the wheel (90) between the grooves, and said elements supplied to the wheel being of like cross section with axes lying within the radius of said circumferential surface characterised by the step of laminating the cable (110) thus produced against a like cable (110') to form a composite cable whose elements (102, 102') have half the centerline spacing of the elements (102, 102') in the individual cables (110, 110').

17. A method according to any preceding claim 12 to 16, characterised by the step of cooling the continuous strip on the common arc, whereby the plastic is cured whilst the spacing of the filamentous elements is maintained by the grooves.

**Patentansprüche**

1. Vorrichtung zur Herstellung von Flachkabel, mit einem drehbaren Rad (50, 90, 132, 150), das auf einem ersten Radius eine Umfangsfläche besitzt, mit Zuführeinrichtungen zur Zufuhr einer Vielzahl von fadenförmigen Elementen (72, 102, 128, 141, 143, 155) zur Umfangsfläche des Rades hin, so daß die Elemente über dem Umfang auf einem gemeinsamen Bogen liegen, ferner mit Extrusionseinrichtungen (10, 11), in der Nähe des gemeinsamen Bogens zur Formung von Kunststoff (69, 110, 129, 140, 157) zwischen dem Umfang des Rades (50, 90, 120, 132, 150) und der Extrusionseinrichtung und um die fadenförmigen Elemente herum, wobei die Umfangsfläche ferner eine Vielzahl von erhabenen Oberflächen (53, 91, 125, 133) aufweist und diese erhabenen Oberflächen auf einem zweiten Radius definiert sind, wobei ferner der zweite Radius größer ist als der erste Radius und die Umfangsfläche überdies Einrichtungen (54, 95, 124, 134, 152) zur präzisen Ausrichtung der fadenförmigen Elemente um den Umfang herum umfaßt, dadurch gekennzeichnet, daß die Umfangsfläche durch ein Paar von Umfangsschienen (61, 96, 130, 153) flankiert ist, daß jede Schiene eine äußere Oberfläche auf einem dritten Radius besitzt, der größer ist als der zweite Radius, daß die Umfangsschienen in Kombination mit der Umfangsfläche einen Formhohlraum begrenzen, daß die Extrusionseinrichtung derart positioniert ist, daß sie Material auf die Umfangsfläche derart extrudiert, daß das extrudierte Material im wesentlichen den Formhohlraum füllt und einen kontinuierlichen Streifen extrudierten Materials mit den darin teilweise eingebetteten fadenförmigen Elementen bildet.

2. Vorrichtung nach Anspruch 1, dadurch gekennzeichnet, daß die erhabenen Oberflächen (53) sich quer erstreckende und radial angeordnete Flächen umfassen, deren Länge geringer ist als der Abstand zwischen den Umfangsschienen.

3. Vorrichtung nach Anspruch 2, dadurch gekennzeichnet, daß die Ausrichteinrichtung sich umfangsmäßig erstreckende Nuten (54) in den erhabenen Flächen umfaßt.

4. Vorrichtung nach Anspruch 1, dadurch gekennzeichnet, daß die Ausrichteinrichtung sich umfangsmäßig erstreckende Nuten (93, 122, 152) in der Umfangsfläche umfaßt.

5. Vorrichtung nach Anspruch 4, dadurch gekennzeichnet, daß die Nuten (93, 122) ein Paar von gegenüberstehenden Wänden (94, 193) und einen Boden (95, 124) besitzen, daß jedes Paar von Wänden (94, 123) von der Umfangsfläche (91, 121) zu seinem Boden hin konvergiert, und daß der Boden eine geringere Breite besitzt als der Durchmesser eines in der Nut aufgenommenen fadenförmigen Elements (102, 128).

6. Vorrichtung nach Anspruch 3, dadurch gekennzeichnet, daß alle der Nuten (93) den gleichen Querschnitt besitzen, daß jede Nut um ihre Mittelebene herum symmetrisch ist, daß die Nuten das gleiche Profil besitzen wie die Abschnitte des Rades zwischen den Nuten, und daß die Nuten derart profiliert sind, daß sie jeweilige Elemente (102) aufnehmen, wobei die Achsen der Elemente innerhalb des Radius der Umfangsfläche (91) des Rades liegen, wodurch ein Kabel (110) geformt wird, das aufnehmend und eindringend mit einem gleichen Kabel (110') zusammenfügbar ist.

7. Vorrichtung nach Anspruch 5 oder 6, dadurch gekennzeichnet, daß die Nuten (93) einen symmetrisch trapezförmigen Querschnitt besitzen.

8. Vorrichtung nach Anspruch 1, dadurch gekennzeichnet, daß die Umfangsfläche (133) eine Vielzahl von Ausnehmungen (136) entlang der gesamten Länge wenigstens einer der Nuten (135) besitzt, daß jede Ausnehmung (136) breiter und tiefer ist als die Nut, wodurch das Band aus Kunststoff (140) mit einer Vielzahl von einzelnen Kunststoffbrücken (144) geformt wird, die über dem in die wenigstens eine Nut gelegten Element (143) geformt sind.

9. Vorrichtung nach Anspruch 1, 3 oder 8, dadurch gekennzeichnet, daß wenigstens eine der Nuten (54, 134, 135, 152) als ein Segment eines Kreisbogens profiliert ist, daß der Bogen im wesentlichen den gleichen Radius wie das darin aufgenommene fadenförmige Element (72, 141, 143, 155) besitzt, daß das Segment weniger als 180° beträgt, wodurch über 180° des Umfangs des Elements in dem Kunststoffband (69, 140, 157) eingebettet sind.

10. Vorrichtung nach einem der vorhergehenden Ansprüche, dadurch gekennzeichnet, daß ein Paar von parallelen Umfangsschienen (60) die Umfangsfläche auf dem Rad (53) flankieren, daß jede Schiene eine äußere Fläche (61) besitzt, die radial auswärts der Umfangsfläche angeordnet ist, und daß die Extrusionseinrichtung (10, 11) im wesentlichen an der äußeren Fläche (61) der Schienen anliegt, wodurch diese Schienen den aus der Extrusionseinrichtung extrudierten Kunststoff einschließen.

11. Vorrichtung nach einem der vorhergehenden Ansprüche, dadurch gekennzeichnet, daß Einrichtungen zur Kühlung (19) des Kunststoffbandes (69, 110, 129, 140, 157) auf dem gemeinsamen Bogen vorgesehen sind, wodurch der Kunststoff ausgehärtet wird, während die Abstände der fadenförmigen Elemente (72, 102, 128, 141, 143, 155) durch die Nuten (54, 93, 122, 134, 135, 152) aufrechterhalten werden.

12. Verfahren zur Herstellung eines Flachkabels, bei dem eine Vielzahl von fadenförmigen Elementen (72, 102, 141, 147, 143, 155) zur einer Umfangsfläche (53, 91, 121, 133, 151) auf einem ersten Radius eines rotierenden Rades zugeführt wird, das eine Vielzahl von nebeneinanderliegenden, sich umfangsmäßig erstreckenden Nuten (54, 93, 122, 134, 135, 152) in dieser Fläche aufweist, so daß jedes Element in einer jeweiligen Nut über einem gemeinsamen Bogen sitzt und die Anordnung derart getroffen ist, daß jedes Element im wesentlichen stationär bezüglich der Umfangsfläche über dem Bogen ist, wobei Kunststoffmaterial gegen die Umfangsfläche (53, 91, 121, 133, 151) extrudiert wird und die Oberfläche eine Vielzahl von erhabenen Flächen aufweist, die auf einem zweiten Radius definiert sind, der größer ist als der der ersten Oberfläche, dadurch gekennzeichnet, daß die fadenförmigen Elemente elektrisch leitende Elemente sind, daß das Kunststoffmaterial ein isolierendes Material ist und ein Rad verwendet wird, das ein Paar von Umfangsschienen besitzt, welche die Umfangsfläche flankieren, daß jede Schiene eine äußere Fläche auf einem dritten Radius aufweist, daß der dritte Radius größer ist als der zweite Radius, daß die Kombination der Umfangsschienen und der Umfangsfläche einen Formhohlraum begrenzt, daß das Extrudieren des Kunststoffs im wesentlichen den Formhohlraum füllt und einen kontinuierlichen Streifen aus extrudiertem Material bildet, in dem die fadenförmigen Elemente teilweise eingebettet sind.

13. Verfahren nach Anspruch 12, dadurch gekennzeichnet, daß ein Band einer Fasermatte (100) zu der Umfangsfläche (93, 91) derart hingeführt wird, daß der kontinuierliche Streifen dazu zwischen die fadenförmigen Elemente (72, 102, 141, 143, 155) und die Nuten (54, 93, 122, 134, 135, 152) angepaßt ist, wodurch der kontinuierliche Streifen die Matte durchdringt und sich mit ihr verbindet, um die Elemente zwischen der Matte und dem kontinuierlichen Streifen extrudierten Materials einzufangen.

14. Verfahren nach Anspruch 12 oder 13, dadurch gekennzeichnet, daß wenigstens eines der Elemente (72, 102, 141, 143, 155) mit einem Material isoliert ist, daß mit dem kontinuierlichen Streifen kompatibel ist, daß der Streifen bei einer Temperatur extrudiert wird, die gerade ausreicht, um die Isolation des wenigstens einen Elements zu schmelzen, wodurch die Isolation auf diesem Element mit dem kontinuierlichen Streifen schmelzverbunden wird.

15. Verfahren nach Anspruch 12, 13 oder 14, dadurch gekennzeichnet, daß die Umfangsfläche (53, 91, 121, 133, 151) mit einer Vielzahl von flachen Ausnehmungen (136) entlang der gesamten Länge wenigstens einer der Nuten (54, 93, 122, 134, 135, 152) versehen wird, daß jede Ausnehmung breiter und tiefer ist als die Nut, wodurch der kontinuierliche Streifen in die Ausnehmungen hineinextrudiert wird, um eine Vielzahl von Kunststoffbrücken (144) über dem in die wenigstens eine Nut gelegten Element zu formen.

16. Verfahren nach Anspruch 12, 13 oder 14, bei dem jede Nut (93) ein Paar von gegenüberstehenden Wänden (94) und einen Boden (95) besitzt, ferner jedes Paar von Wänden (94) zu seinem Boden (94) hin konvergiert, wobei die Nuten alle den gleichen Querschnitt besitzen und das gleiche Profil wie die Abschnitte des Rades (90) zwischen den Nuten, wobei die dem Rad zugeführten Elemente gleichen Querschnitt haben und ihre Achsen innerhalb des Radius der Umfangsfläche liegen, dadurch gekennzeichnet, daß das derart erzeugte Kabel (110) gegen ein gleiches Kabel (110') laminiert wird, um ein zusammengesetztes Kabel zu formen, dessen Elemente (102, 102') den halben Mittellinienabstand der Elemente (102, 102') in dem einzelnen Kabel (110, 110') besitzen.

17. Verfahren nach einem der Ansprüche 12 bis 16, dadurch gekennzeichnet, daß der kontiniuerliche Streifen auf dem gemeinsamen Bogen gekühlt wird, wodurch der Kunststoff ausgehärtet wird, während die Abstände der fadenförmigen Elemente durch die Nuten aufrechterhalten werden.

**Revendications**

1. Appareil pour la fabrication d'un câble plat, comprenant une roue tournante (50, 90, 132, 150) présentant une surface circonférentielle d'un premier rayon; des moyens d'alimentation pour l'alimentation de plusieurs éléments filamenteux (72, 102, 128, 141, 143, 155) vers la surface circonférentielle de la roue afin que les éléments s'étendent sur la circonférence sur un arc commun; des moyens d'extrusion (10, 11) adjacents audit arc commun pour mettre en forme de la matière plastique (69, 110, 129, 140, 157) entre la circonférence de la roue (50, 90, 120, 132, 150) et les moyens d'extrusion et autour des éléments filamenteux, la surface circonférentielle comprenant en outre plusieurs surfaces surélevées (53, 91, 125, 133), les surfaces surélevées étant définies à un deuxième rayon, le deuxième rayon étant plus grand que ledit premier rayon, la surface circonférentielle comprenant en outre des moyens (54, 95, 124, 134, 152) destinés à aligner avec précision lesdits éléments filamenteux le long de la circonférence, caractérisé en ce que la surface circonférentielle est flanquée, de deux rails circonférentiels (61, 96, 130, 153), chaque rail présentant une surface distale d'un troisième rayon, le troisième rayon étant plus grand que ledit deuxième rayon, les rails circonférentiels définissant, en combinaison avec la surface circonférentielle, une cavité de moulage; les moyens d'extrusion étant positionnés afin d'extruder de la matière sur la surface circonférentielle de manière que la matière extrudée remplisse sensiblement ladite cavité de moulage et forme une bande continue de matière extrudée dans laquelle lesdits éléments filamenteux sont partiellement noyés.

2. Appareil selon la revendication 1, caractérisé en ce que les surfaces surélevées (53) comprennent des surfaces s'étendant transversalement et disposées radialement, ayant une longueur inférieure à la distance comprise entre les rails circonférentiels.

3. Appareil selon la revendication 2, caractérisé en ce que les moyens d'alignement comprennent des gorges (54) s'étendant circonférentiellement dans lesdites surfaces surélevées.

4. Appareil selon la revendication 1, caractérisé en ce que les moyens d'alignement comprennent des gorges (93, 122, 152) s'étendant circonférentiellement dans ladite surface circonférentielle.

5. Appareil selon la revendication 4, caractérisé en ce que les gorges (93, 122) comprennent deux parois opposées (94, 123) et un fond (95, 124), chaque paire de parois (94, 123) convergeant de la surface circonférentielle (91, 121) vers son fond, et ledit fond étant d'une largeur inférieure au diamètre d'un élément filamenteux (102, 128) reçu dans la gorge.

6. Appareil selon la revendication 3, caractérisé en ce que toutes les gorges (93) sont de même section transversale, chaque gorge étant symétrique par rapport à son plan central, lesdites gorges étant de même profil que les parties de la roue comprises entre les gorges, et lesdites gorges étant profilées pour recevoir des éléments respectifs (102) de façon que les axes des éléments soient situés en deçà du rayon de la surface circonférentielle (91) de la roue, afin qu'il soit formé un câble (110) pouvant être accouplé de façon hermaphrodite avec un câble analogue (110').

7. Appareil selon la revendication 5 ou 6, caractérisé en ce que les gorges (93) ont une section transversale trapézoïdale symétrique.

8. Appareil selon la revendication 1, caractérisé en ce que la surface circonférentielle (133) présente plusieurs évidements (136) s'étendant sur toute la longueur d'au moins l'une des gorges (135), chaque évidement (136) étant plus large et plus profond que la gorge, afin que le ruban de matière plastique (140) comporte, de moulage, plusieurs pontets individuels (144) en matière platique formés au-dessus de l'élément (143) posé dans ladite gorge.

9. Appareil selon la revendication 1, 3 ou 8, caractérisé en ce qu'au moins l'une des gorges (54, 134, 135, 152) est profilée sous la forme d'un segment d'arc de cercle, ledit arc étant d'un rayon sensiblement identique à celui de l'élément filamenteux (72, 141, 143, 155) qui y est reçu, ledit segment étant inférieur à 180°, de facon que la circonférence dudit élément soit noyée sur plus de 180° dans le ruban (69, 140, 157) de matière platique.

10. Appareil selon l'une quelconque des revendications précédentes, caractérisé par deux rails circonférentiels parallèles (60) flanquant la surface circonférentielle sur la roue (53), chaque rail présentant une surface distale (61) disposée radialement à l'extérieur de ladite surface circonférentielle, et lesdits moyens d'extrusion (10, 11) étant sensiblement en butée contre lesdites surfaces distales (61) des rails, afin que lesdits rails retiennent la matière plastique extrudée à partir desdits moyens d'extrusion.

11. Appareil selon l'une quelconque des revendications précédentes, caractérisé par des moyens (19) destinés à refroidir le ruban de matière plastique (69, 110, 129, 140, 157) sur ledit arc commun, afin que la matière plastique durcisse, tandis que l'écartement des éléments filamenteux (72, 102, 128, 141, 143, 155) est maintenu par les gorges (54, 93, 122, 134, 135, 152).

12. Procédé pour fabriquer un câble plat, dans lequel plusieurs éléments filamenteux (72, 102, 141, 147, 143, 155) sont avancés vers une surface circonférentielle (53, 91, 121, 133, 151) d'un premier rayon d'une roue tournante présentant plusieurs gorges juxtaposées (54, 93, 122, 134, 135, 152) s'étendant circonférentiellement dans ladite surface, de manière que chaque élément soit logé dans une gorge respective sur un arc commun, l'agencement étant tel que chaque élément est sensiblement fixe par rapport à la surface circonférentielle, sur ledit arc, procédé dans lequel une matière plastique est extrudée contre la surface circonférentielle (53, 91, 121, 133, 151), ladite surface présentant plusieurs surfaces surélevées définies à un deuxième rayon supérieur à celui de ladite première surface, caractérisé en ce que les éléments filamenteux sont des éléments électriquement conducteurs, la matière plastique est une matière isolante et une roue est utilisée avec deux rails circonférentiels flanquant ladite surface circonférentielle, chaque rail ayant une surface distale d'un troisième rayon, le troisième rayon étant plus grand que ledit deuxième rayon, la combinaison desdits rails circonférentiels et de ladite surface circonférentielle définissant une cavité de moulage, l'extrusion de ladite matière plastique remplit sensiblement la cavité de moulage et forme une bande continue de matière extrudée dans laquelle lesdits éléments filamenteux sont partiellement noyés.

13. Procédé selon la revendication 12, caractérisé par l'étape qui consiste à faire avancer un ruban d'un mat de fibres (100) vers la surface circonférentielle (53, 91) afin que la bande continue s'y conforme entre les éléments filamenteux (71, 102, 141, 143, 155) et les gorges (54, 93, 122, 134, 135, 152), pour que ladite bande continue pénètre dans le mat et s'y lie afin de retenir les éléments entre le mat et la bande continue de matière extrudée.

14. Procédé selon la revendication 12 ou 13, caractérisé en ce qu'au moins l'un des éléments (72, 102, 141, 143, 155) est isolé au moyen d'une matière compatible avec la bande continue, ladite bande étant extrudée à une température juste suffisante pour faire fondre partiellement l'isolant sur ledit élément, afin que l'isolant sur ledit élément se lie par fusion à la bande continue.

15. Procédé selon la revendication 12, 13 ou 14, caractérisé par l'étape qui consiste à prévoir dans la surface circonférentielle (53, 91, 121, 133, 151) plusieurs évidements peu profonds (136) s'étendant sur toute la longueur d'au moins l'une des gorges (54, 93, 122, 134, 135, 152), chaque évidement étant plus large et plus profond que la gorge, afin que la bande continue soit extrudée dans les évidements pour former plusieurs pontets (144) en matière plastique sur l'élément posé dans ladite gorge.

16. Procédé selon la revendication 12, 13 ou 14, dans lequel chaque gorge (93) comprend une paire de parois opposés (94) et un fond (95), chaque paire de parois (94) convergeant vers son fond (95), lesdites gorges étant toutes d'une section transversale symétrique identique et étant du même profil que les parties de la roue (90) comprises entre les gorges, et lesdits éléments avancés vers la roue étant d'une section transversale identique, avec des axes s'étendant en deçà du rayon de ladite surface circonférentielle, caractérisé par l'étape qui consiste à stratifier le câble (110) ainsi produit contre un câble identique (110') pour former un câble composite dont des éléments (102, 102') présentent un entraxe égal à la moitié de celui des éléments (102, 102') des câbles individuels (110, 110').

17. Procédé selon l'une quelconque des revendications 12 à 16, caractérisé par l'étape qui consiste à refroidir la bande continue sur l'arc commun, afin que la matière plastique durcisse pendant que l'écartement des éléments filamenteux est maintenu par les gorges.

Fig. 1

10 50 11 14 16 46 72 15 68 19 18 20 23 22 24 27 26 28 30 32 36 34 40 38 76 44 45

Fig. 2A

Fig. 2B

Fig. 2C

FIG 3

FIG 4

PRIOR ART

80

79

81

78

80

79

81

82

81

83

85

86

$\textit{FIG 5}$

0 109 222

_FIG 6_

_FIG 7_

_FIG 8_

FIG. 9

FIG. 10

FIG. 11

FIG. 12

FIG. 13A

FIG. 13B

FIG. 14A

FIG. 14B

FIG. 15A

FIG. 15B

7